# EUROPÄISCHE PATENTANMELDUNG

(11) **EP 0 563 591 A1**
(43) Veröffentlichungstag der Anmeldung: **06.10.1993**
(21) Anmeldenummer: 93103265.0
(22) Anmeldetag: 02.03.1993
(51) Int. Cl.: B62D 49/06

(54) **Zentrales Drehgelenk für optimale Bodenanpassung von Frontgeräten bei Ackerschleppern**

(30) Priorität: 03.04.1992 DE 4211110
(71) Anmelder: MAN Nutzfahrzeuge Aktiengesellschaft, 80976 München (DE); Xaver Fendt GmbH & Co., D-87609 Marktoberdorf (DE)
(72) Erfinder: Möller, Heribert, Dipl.-Ing. (FH), W-8802 Sachsen (DE)

(57) **Zusammenfassung**

Die Erfindung bezieht sich auf ein zentrales Drehgelenk für optimale Bodenanpassung von Frontgeräten bei Ackerschleppern. Erfindungsgemäß wird der Zentralholm (1) starr mit dem Tragrohr (10) verbunden und das Tragrohr (10) durch Loslager (11) und Festlager (12) drehbar im Träger (13) gelagert, der mit der Ölwanne (3) durch eine Verschraubung fest verbunden ist. Loslager (11) und Festlager (12) sind in den Schmierölkreislauf des Motors (2) eingebunden. Durch die erfindungsgemäße Lagerung kann der Zentralholm als handelsübliches Vierkantrohr ausgebildet sein. Ein weiterer Vorteil ist darin zu sehen, daß das Festlager (12) für die Aufnahme der axialen Kräfte die in den Zentralholm (1) eingeleitet werden frei zugänglich ist, solange der Träger (13) noch nicht an der Ölwanne (3) angeflanscht ist. Bei der Verwendung an Ackerschleppern ist dem Festlager (12) besondere Sorgfalt zu widmen, da naturgemäß die Axialkräfte sehr hoch sind.

## Beschreibung

Die Erfindung bezieht sich auf ein zentrales Drehgelenk gemäß dem Gattungsbegriff des Patentanspruches 1.

Zur Drehung eines Zentralholmes um seine Längsachse ist es bekannt, den Zentralholm mittels eines radial geführten Loslagers und eines kombiniert radial und axial geführten Festlagers gegenüber einem Tragrohr zu führen. Das Tragrohr ist starr mit einer Ölwanne eines in Fahrzeugmitte angeordneten Motors verbunden. Die Ölwanne ist als tragendes Bauteil ausgeführt, welches eine Vorderachse und eine Hinterachse einerseits über den Zentralholm und andererseits über ein Getriebegehäuse, ein Kupplungsgehäuse und ein Schwungradgehäuse miteinander verbindet. Die im Inneren des Zentralholmes gelegene Lagerung des Tragrohres ist als eine Schweißkonstruktion ausgebildet. Die axiale Führung des Festlagers wird durch einen Bolzen bewerkstelligt, welcher quer zur Drehachse in eine Ringnut auf dem Tragrohr eingeschoben ist. Die bekannte Einrichtung benötigt viele Bauteile, sie kann nicht in den Schmierölkreislauf des Motors eingebunden werden, da eine Rückführung des Öls sehr schwierig wäre und der Zentralholm muß in sehr aufwendiger Arbeit durch eine Schweißkonstruktion zur Aufnahme der Lagerung auf dem Tragrohr vorbereitet werden. Die mangelhafte Schmierung führt zu einem raschen Verschleiß, zudem ist die axiale Führung des Festlagers angesichts der hohen axialen Kräfte eine Schwachstelle.

Ausgehend von einem Drehgelenk gemäß dem Gattungsbegriff liegt der Erfindung die Aufgabe zugrunde, die Fertigung zu rationalisieren und gleichzeitig die Schmierung zu verbessern, um die Standzeit des Drehgelenkes nachhaltig zu erhöhen.

Erfindungsgemäß wird diese Aufgabe durch die kennzeichnenden Merkmale des Patentanspruches 1 gelöst.

Durch die Umkehrung des Lagerprinzips, also durch die starre Verbindung von Zentralholm mit dem Tragrohr und die drehbare Lagerung des Tragrohres im Träger kann der Zentralholm sehr einfach, beispielsweise aus einem handelsüblichen Vierkantrohr hergestellt werden. Die Lagerung bedarf keiner aufwendigen, eingeschweißten Lagerträger. Das Festlager, das am freien, also dem zugänglichen Ende des Tragrohres angeordnet ist kann somit großzügig bemessen werden. Die Standzeit des Drehgelenks wird durch die Einbeziehung in den Schmierölkreislauf des Motors erheblich gesteigert.

Eine vorteilhafte Weiterbildung der Lagerung und der Begrenzung des Ausdrehwinkels des Zentralholms relativ zum Träger kann den Unteransprüchen 2 und 3 entnommen werden.

Ein Ausführungsbeispiel des erfindungsgemäßen zentralen Drehgelenkes ist in Zeichnungen dargestellt. Es zeigt:
- Figur 1: eine Seitenansicht eines Ackerschleppers mit zentralem Drehgelenk
- Figur 2: ein Detail eines Drehgelenks in einem Längsschnitt
- Figur 3: einen Schnitt III-III mit Drehanschlag des Zentralholmes

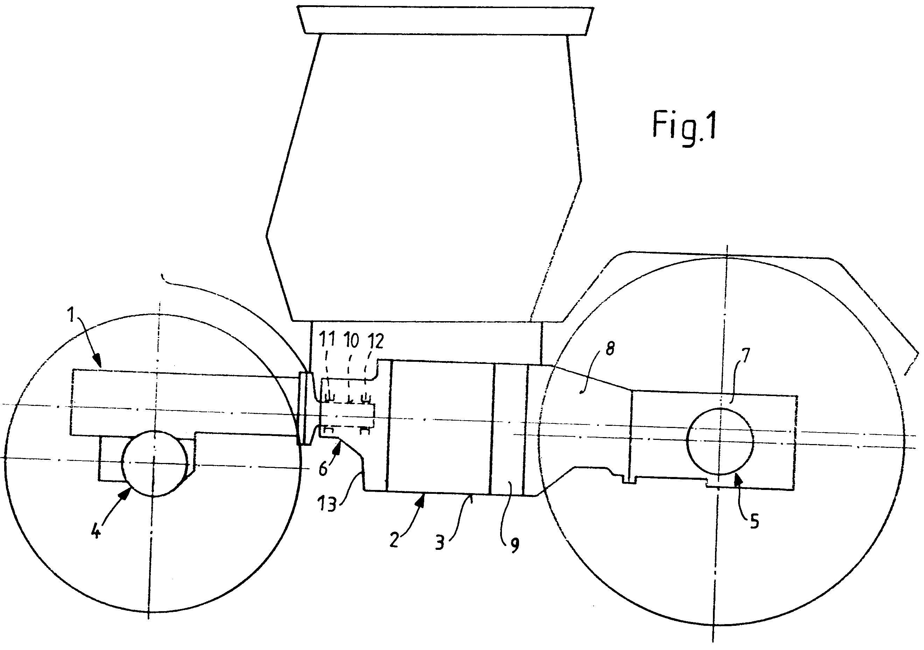

In Figur 1 ist ein Ackerschlepper gezeigt, dessen hier nicht dargestellten Anbaugeräte an der Frontseite eines Zentralholmes 1 angelenkt werden können. In Fahrzeugmitte befindet sich ein Motor 2, dessen Ölwanne 3 als tragendes Bauteil ausgebildet ist. Diese Ölwanne 3 ist ein integrales Bauteil, welches eine Vorderachse 4 mit einer Hinterachse 5 verbindet. Die Verbindung der Vorderachse 4 mit der Ölwanne 3 wird über den Zentralholm 1 und das zentrale Drehgelenk 6 bewerkstelligt, während die Verbindung der Hinterachse 5 mit der Ölwanne 3 durch ein Getriebegehäuse 7, ein Kupplungsgehäuse 8 und ein Schwungradgehäuse 9 hergestellt wird.

Da sich die mit dem Zentralholm 1 starr verbundene Vorderachse 4 und die ebenfalls an den Zentralholm 1 angelenkten, hier nicht dargestellten Geräte dem Geländeverlauf anpassen müssen, ist das zentrale Drehgelenk 6 vorgesehen. Dieses besteht aus einem Tragrohr 10 welches drehbar in einem Loslager 11 und einem Festlager 12 gelagert ist. Die Lager 11 und 12 wiederum sind in einem Träger 13 angeordnet, der mit der Ölwanne 3 durch eine Verschraubung fest verbunden ist. Der Zentralholm 1 ist ebenfalls durch eine Verschraubung mit dem Tragrohr 10 fest verbunden.

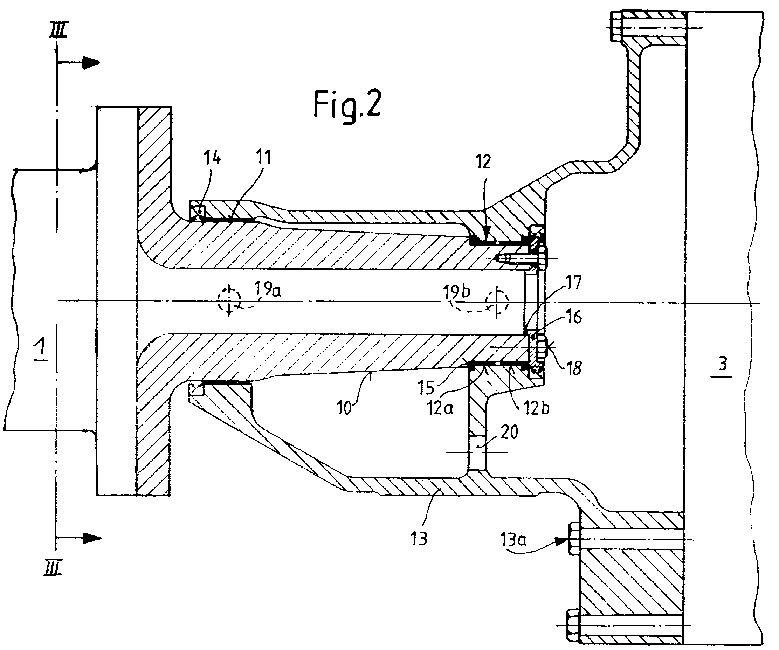

Figur 2 zeigt in einem Längsschnitt eine detailierte Darstellung der Lagerung des Tragrohres 10 im Träger 13. Erfindungsgemäß ist der Zentralholm 1 durch Schrauben starr mit dem Tragrohr 10 verbunden und dieses wiederum über das Loslager 11 und das Festlager 12 drehbar im Träger 13 gelagert. Der Träger 13 ist mittels Schrauben 13a an die Ölwanne 3 angeflanscht. Das Loslager 11 ist ein reines Radiallager, welches durch einen Simmerring 14 gegen Eindringen von Schmutz und gegen Austritt von Schmieröl geschützt ist.

Das Festlager 12 weist eine kombinierte radiale und axiale Führung auf. Der axialen Führung dient einerseits ein Bund 15 am Tragrohr 10 und andererseits ein ringförmiger Anschlag 16, der mittels radialer Führung 17 im Tragrohr 10 zentriert und durch Schrauben 18 mit dem Tragrohr 14 verbunden und damit gegen axiale Bewegung gesichert ist.

Das Festlager 12 weist getrennte Lagerschalen 12a und 12b auf, die sich zur Montage von beiden Seiten in eine für die Aufnahme der Lagerschalen 12a, 12b vorgesehene Bohrung des Trägers 13 einschieben lassen. Zur Schmierung der Lager 11 und 12 sind zwei Bohrungen 19a, 19b vorgesehen, welche über hier nicht dargestellte Leitungen an den Schmierölkreislauf des Motors 2 (Figur 1) angeschlossen sind. Über eine Öffnung 20 im Träger 13 kann das Schmieröl in die Ölwanne 3 zurückfließen.

Durch die erfindungsgemäß Lagerung des Zentralholmes 1 können die Lager 11 und 12 in den Schmierölkreislauf des Motors 2 (Figur 1) eingebunden werden, wodurch der Verschleiß der Lager 11 und 12 minimiert wird. Die Gesamtzahl der erforderlichen Bauteile wird verringert und die hohen axialen Kräfte können durch das gut durchgebildete Festlager 12 ohne Schaden aufgenommen werden.

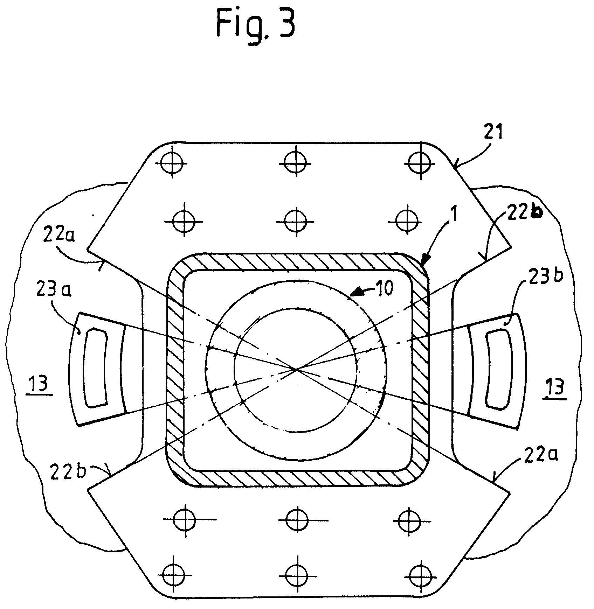

Figur 3 zeigt einen Schnitt III-III aus Figur 2. Ein Flansch 21 des Zentralholmes 1 ist mit zwei Drehanschlägen 22a und 22b versehen, welche punktsymmetrisch zum Drehmittelpunkt des Tragrohres 10 angeordnet sind. Zwischen den Drehanschlägen 22a, 22b sind Festanschläge 23a, 23b angeordnet, welche Bestandteil des hier nicht näher dargestellten Trägers 13 (Figur 1, Figur 2) sind. Aus der Punktsymmetrie folgt, daß beim Anschlagen der Drehanschläge 22a, 22b gegen die Festanschläge 23a, 23b keine Querkraft auf das Tragrohr 10 ausgeübt wird, da das Drehmoment des Zentralholmes 1 bei der Drehbegrenzung ein Kräftepaar hervorruft, aus dem ein Gegendrehmoment resultiert, dessen gleich große, aber gegensinnig gerichteten Kräfte sich jedoch aufheben. Einer der Festanschläge 23a oder 23b kann justierbar ausgeführt sein, so daß beim Anschlag eines der Drehanschläge 22a oder 22b zum jeweils anderen Festanschlag kein Spiel auftreten kann.

## Patentansprüche

1. Zentrales Drehgelenk für optimale Bodenanpassung von Frontgeräten bei Ackerschleppern, bestehend aus einem Tragrohr und einem Zentralholm, wobei das Tragrohr starr an eine Ölwanne eines in Mitte des Ackerschleppers gelegenen Motors angeschlossen ist und der Zentralholm mittels einer als Loslager und Festlager ausgebildeten Gleitlagerung drehbar um seine Längsachse gegenüber dem Tragrohr geführt ist, dadurch gekennzeichnet, daß das Tragrohr (10) starr mit dem Zentralholm (1) zu einer baulichen Einheit verbunden ist, daß das Tragrohr (10) dieser Einheit in einem Träger (13) mittels einer als Loslager (11) und Festlager (12) ausgebildeten Gleitlagerung geführt ist, und daß eine Lagerschmierung des Loslagers (11) und des Festlagers (12) in einen Schmierölkreislauf des Motors (2) eingebunden ist.

2. Zentrales Drehgelenk nach Anspruch 1, dadurch gekennzeichnet, daß die Lagerung des Tragrohres (10) im Träger (13) aus einem radial geführten Loslager (11) und einem kombiniert radial und axial geführten Festlager (12) gebildet wird, daß das Festlager (12) an einem freien, dem Zentralholm (1) abgewandten Ende des Tragrohres (10) vorgesehen ist, und daß das Loslager (11) und das Festlager (12) über Bohrungen (19a, 19b) und Schmierölleitungen mit dem Schmierölkreislauf des Motors (2) verbunden ist und der Träger (13) einer Rückführung des aus den Lagern (11, 12) abfließenden Öls in die Ölwanne (3) des Motors (2) dient.

3. Zentrales Drehgelenk nach den Ansprüchen 1 und 2, dadurch gekennzeichnet, daß der Zentralholm (1) an seinem, dem Tragrohr (10) zugewandten freien Ende mit zwei Drehanschlägen (22a, 22b) versehen ist, welche bezüglich einer Drehachse des Tragrohres (10) punktsymmetrisch angeordnet sind, und daß diesen Drehanschlägen (22a, 22b) zwei ebenfalls punktsymmetrisch angeordnete und mit dem Träger (13) verbundene Festanschläge (23a, 23b) zugeordnet sind.
